# EUROPEAN PATENT APPLICATION

(11) **EP 4 538 948 A1**
(43) Date of publication of application: **16.04.2025**
(21) Application number: 23386094.9
(22) Date of filing: 10.10.2023
(51) Int. Cl.: G06Q 20/04, G06Q 20/40, G06Q 20/20, G06Q 30/04

(54) **METHOD, PAYMENT TERMINAL, AND SYSTEM FOR PROCESSING A DIGITAL PAYMENT**

(71) Applicant: Ntafopoulos, Theodoros, 2548 LS Den Haag (NL)
(72) Inventor: NTAFOPOULOS, Theodoros, 2548 LS Den Haag (NL); NTAFOPOULOS, Catharina Athanassiadis, 2548 LS Den Haag (NL)
(74) Representative: V.O.

(57) **Abstract**

Disclosed are a method, a payment terminal, and a system for processing a digital payment, which comprise determining respective product data associated with one or more products to be sold, and determining account details for a payment account of a buyer. Based at least on the respective product data and account details, a payment request is sent to the payment account of the buyer. Based on approval of the payment request, a payment receipt comprising a list of the one or more products and their respective product data is generated, and the payment receipt is stored on a server. The payment request is generated including an identifier which identifies the payment receipt stored on the server and the payment request including the identifier is sent to the buyer's payment account.

## Description

### TECHNICAL FIELD AND BACKGROUND

The present disclosure relates to a method, payment terminal, and system for processing a digital payment.

As background, WO 2011/014920 A1 describes a prior art system and method for providing an electronic funds and receipt transfer system capable of making available to the customer or other authorized third party, receipt data relating to an EFTPOS transaction in an electronic format. As explained in the prior art, currently Electronic Fund Transfer Point Of Sale (EFTPOS) systems are used extensively in the retail environment.

Current EFTPOS systems generate a large amount of paper receipts for the customers who use their service. In the existing EFTPOS systems either a receipt combining the merchant's receipt and the EFTPOS transaction receipt or two receipts, one being the merchant's receipt, the other the EFTPOS transaction receipt, are created. Many of receipts produced are either lost or damaged within a few days of being created. It is known that many merchants also print EFTPOS receipts on thermally active paper which is known to fade over time. In the case of existing EFTPOS systems these receipts cannot be regenerated. This gives rise to a problem when a customer needs to verify at a later date that the purchase was made and the nature of the purchase.

In a preferred implementation of said prior art, the receipt data generated by the merchant at the time of sale is attached to the EFTPOS transaction data and sent using the same channels as known EFTPOS systems. To access the receipt data the system allows the customer to access their financial institutions internet banking webpage and print, save or email a copy of the receipt as generated by the merchant at the time of sale. However, this may require adaptations of the EFTPOS systems, and is dependent on adaptations of systems of the financial institution storing the receipt data.

Alternatively, said prior art describes that receipt data may be transferred to a third party location for later retrieval. According to the prior art, the merchant receipt data and a copy of at least some of the EFTPOS transaction data may be transferred to a third party location such as a server farm. According to the prior art, the EFTPOS transaction data transferred to the third party location is that which is necessary to match the transactions with the records of the Customer's financial institution. According to the prior art, the transfer of receipt data to the third party location is conducted via a secure connection. However, there may still be a security risk and/or unnecessary transfer and storage of data.

There remains a need for further simplifying the ability for customers purchasing goods or services at a vendor to keep track of their purchases and receipt data, in particular requiring minimal adaptation of existing financial systems, and without requiring unnecessary security risks and/or transfer and storage of excess data.

### SUMMARY

Aspects of the present disclosure relate to a method for processing a digital payment. The method comprises (i) determining respective product data associated with one or more products (e.g. goods or services) to be sold; (ii) determining account details for a payment account of a buyer; (iii) based at least on the respective product data and account details, sending a payment request to the payment account of the buyer; (iv) based on approval of the payment request, generating a payment receipt comprising a list of the one or more products and their respective product data; and (v) storing the payment receipt on a server. The payment request is generated including an identifier which identifies the payment receipt stored on the server and the payment request including the identifier is sent to the buyer's payment account.

In other words, an identifier is included in the payment request, e.g. in the unstructured remittance information field, which is sent to the buyer's payment account. The identifier couples the transaction to the corresponding (digital) payment receipt, and through the identifier the buyer is able to directly retrieve said payment receipt, e.g. via his or her account statement. For example, the identifier comprises a (hyper)link, such as an URL link, that provides access to the storage location of the payment receipt on the server. More than one identifier can be included in the payment request, e.g. to have multiple links to documents (including the payment receipt), such as a warranty certificate related to a product, or a (discount) voucher based on the transaction that can be used in subsequent transactions between the merchant and client. In this way, any information associated with the transaction is bundled and retrievable from a single access point, e.g. from the account holder's online bank statement. For example, each transaction can be directly coupled to the individual goods or services associated with that transaction, including the respective individual sales prices, tax tariffs, and any other information at individual product level. This facilitates and expediates any further steps for processing the transactions, e.g. for bookkeeping and accounting purposes, , or for reimbursements, and obviates the need for archiving printed receipts.

In some embodiments, the payment request is generated and/or modified based on the storing of the payment receipt on the server. Thus, the step of generating and/or modifying the payment request is dependent on the step of storing of the payment receipt on the server. Storing of the payment receipt e.g. includes the act of storing, or saving, the payment receipt, or the act of generating or appointing a location on the server at which the payment receipt is to be stored.

For example, the payment receipt is stored in a respective storage location on the server. Upon storing, an identifier associated with the respective storage location may be generated. The payment request may be generated and/or modified to include the identifier associated with the respective storage location.

In another example, an identifier is generated, e.g. comprising a storage address, representative of the storage location at which the payment receipt is to be stored. The payment request may be generated and/or modified to include the identifier. Storing of the payment receipt on the server, in particular at a location corresponding to the identifier, may be performed at a desired time after generating the identifier. For example, the storing may be performed simultaneously with the generating and/or modifying the payment receipt. Alternatively, the storing may be performed at a later stage. For example, the storing may comprise storing a plurality of payment receipts, e.g. two or more, associated with separate transactions, e.g. at regular intervals in time, to bundle data transmission to the server.

In other or further embodiments, the identifier comprises a location and/or name of the payment receipt on the server. For example, the identifier comprises a directory and/or filename of the payment receipt on the server.

In some embodiments, the identifier comprises a Uniform Resource Identifier (URI), preferably a Universal Resource Locator (URL) link, e.g. in the form of a hyperlink, that directs to the storage location on the payment receipt on the server. A Uniform Resource Identifier is generally understood as a unique sequence of characters that identifies a logical or physical resource used by web technologies. A Uniform Resource Locator, colloquially termed a web address, is generally understood as a reference to a web resource that specifies its location on a computer network (e.g. the Internet) and a mechanism for retrieving it. In this case, the URL may specify the payment receipt on the server. For example, the URL comprises a host name of the server, preferably including specification of a web resource on the server corresponding to the payment receipt. For example, the specification of a web resource may include reference to a webpage and/or file (e.g. document) on the server corresponding to the payment receipt. Alternatively, or in addition, the URL may include one or more parameters indicating the payment receipt and/or its location on the server. For example, one or more parameter can be added to the URL to form a "GET request" for accessing the payment receipt (typically parameters are added after a "?" sign to tell the server which resources are meant).

Preferably, the data server is configured to store the payment receipt at a location accessible via a Universal Resource Locator (URL) link, wherein the unique identifier comprises the URL link. For example, the URL link is included in the unstructured remittance information field of the payment request and the corresponding transaction details that can be retrieved by the account holder, e.g. via the account holder's online bank statement. In this way, the account holder can e.g. view, print or download the payment receipt by following the URL link in the transaction details, e.g. on a computer or other type of user device.

Preferably, the payment receipt is retrievable via the URL and/or webpage, e.g. by displaying the payment receipt on the webpage and/or by downloading the payment receipt from the webpage and/or downloading the file directly via the URL (e.g. using File Transfer Protocol, FTP), e.g. onto a user device such as a computer or smart phone. Alternatively to the use of an URL, also other types of identifiers can be used, e.g. a reference or key to an entry in a database storing the payment receipt. Accordingly, the server may be configured to access the stored payment receipt based on the unique identifier.

In some embodiments, the payment request is generated and/or modified based on a storage location of the payment receipt on the server. In other words, the payment receipt is first stored on the server at a certain location, or a location is assigned to the payment request before the storing. Upon generating the payment request, the storage location information may be included in the payment request to be sent to the buyer's payment account. Alternatively, the payment request may already be generated, and the payment request is modified by adding the identifier to the payment request, prior to sending the payment request to the buyer's payment account. Upon generating the identifier and/or the storage location, this allows information pertaining to the payment request to be incorporated in the identifier or the storage location as well. For example, the payment request is modified compared to a (regular) payment request not having an associated payment receipt. For example, a regular payment request is first generated, and then modified to additionally include the identifier.

In preferred embodiments, access to the payment receipt is restricted and/or secured, e.g. only accessible after verification of a user and/or device accessing the payment receipt. For example, the server on which the payment receipt is stored may be secured such that each payment receipt is accessible by the corresponding client, or buyer only. For example, in order to access his or her payment receipts, the client may need to provide credentials, such as an access code or a user name and password. Alternatively, or additionally, the payment receipt may be accessible via a registered (user) device. For example, the payment receipt is accessible via a webpage referenced by a Universal Resource Locator (URL), wherein the webpage requires login information before allowing access to the payment receipt. Optionally, the login information can be stored on an accessing device, e.g. stored in a cookie. In this way a user does not need to login each time to access their one or more payment receipts.

Also other or further forms of security can be envisaged. For example, the URL itself may include a code to access the payment receipt. For example, the URL may be obfuscated, e.g. comprising (quasi) random characters known only to the server, e.g. forming a directory and/or filename of the payment receipt.

In some embodiments, the payment request is configured such that the unique identifier forms part of payment details of the corresponding payment in the buyer's payment account. For example, the unique identifier comprises a unique text of letters, numbers, and/or other characters, that becomes part of a description for the corresponding payment, e.g. in the unstructured remittance information field of the transaction.

For each product, the product data may comprise at least a monetary value including a product description and/or a tax tariff. Accordingly, the product data is directly useable for bookkeeping purposes. In other words, the payment request or transaction, and the payment receipt associated therewith can directly be processed and reported in an efficient manner by the payment receipt providing data associated with the payment on an individual product level. This obviates intermediate steps such as determining, for each product, the appropriate product category and corresponding tax tariff, as performed in conventional, known methods for processing digital payments. The payment receipt may comprise a list of multiple products and corresponding multiple monetary values and other data associated with each respective product, wherein the payment request comprises a single monetary value based on a sum of the multiple monetary values.

Upon generating the payment request, a supplementary amount (e.g. surcharge) may be added to the payment for the service of storage and/or access to the payment receipt. The service may be provided by the merchant, the bank, or any other third party. Such a service may be selectable by a user when paying. For example, a buyer or merchant may choose whether or not the payment receipt is to be stored on a server and coupled to the transaction such that the payment receipt is accessible, e.g. from the buyer's payment account. In case the service is chosen, a surcharge is added to the total combined monetary value of the product(s) associated with the transaction. The surcharge may be a fixed amount, or an amount that is relative to the total combined monetary value, e.g. a percentage thereof. Possibly, the buyer or merchant may select a duration of access or storage on the server. For example, the payment receipt may be accessible for one year, two years, etc. from the date of payment. The duration of storage on the server can be the same, or longer, e.g. to allow the user to regain access to the payment receipts at a later stage. The duration may be extendible, e.g. by paying a further surcharge directly to the service provider. A different surcharge may be added based on the duration of storage and/or access. Nonetheless, the payment receipts may be deleted from the server after a predefined term has expired, e.g. three years, five years, or ten years from the date of payment.

Other aspects of the present disclosure pertain to a non-transitory computer-readable medium storing instructions that, when executed by a payment terminal, causes the payment terminal to perform the method described herein.

Yet other aspects of the disclosure relate to a payment terminal configured to perform any method described herein, and/or comprising the non-transitory computer readable medium storing instructions. A payment terminal, also known as a point of sale (POS) terminal, credit card machine, PIN pad, EFTPOS terminal (or by the older term as PDQ terminal which stands for "Process Data Quickly"), is a device which interfaces with payment cards to make electronic funds transfers. The terminal typically consists of a secure keypad (e.g. a PIN pad for entering PIN), a screen, a means of capturing information from payments cards and a network connection to access the payment network for authorization.

In general, a payment terminal as disclosed herein allows a merchant to capture required credit and debit card information and to transmit this data to the merchant services provider or bank for authorization and finally, to transfer funds to the merchant. The terminal allows the merchant or their client to swipe, insert or hold a card near the device to capture the information. They are often connected to point of sale systems so that payment amounts and confirmation of payment can be transferred automatically to the merchant's retail management system. Terminals can also be used in standalone mode, where the merchant keys the amount into the terminal before the customer present their card and personal identification number (PIN).

The payment terminal disclosed herein may be arranged for transmitting data over cellular network connections and Wi-Fi, standard telephone line or Ethernet connections, Bluetooth, or even satellite networks, e.g. in remote areas and onboard airplanes. The payment terminal may also have the ability to cache transactional data to be transmitted to the gateway processor when a connection becomes available.

Yet other aspects of the present disclosure pertain to a system comprising the payment terminal described herein, and a storage server for storing payment receipts. For example, a storage server of a financial institution or third party may be serving a webpage (e.g. an online account statement), wherein the webpage comprises a transaction with a link to the payment receipt on the storage server. For example, the buyer may hold an account at a bank, which serves a webpage or application that provides a statement of the account. The statement e.g. includes an overview of transactions that occurred in a certain time frame. Each transaction may be provided with further details of said transaction, such as the date of transaction, the amount payed or received, the name and account of the other person or business involved in the transaction, and a description of the transaction. The link to the payment receipt can be included with each transaction, e.g. in the unstructured remittal information field.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 illustrates an embodiment of a method and system for processing a digital payment;
FIG 2 illustrates an embodiment of a payment terminal configured to perform the method described herein.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

A POS or point of sale terminal is a device or system that is used to process transactions by retail customers, or buyers. For example, a POS terminal may comprise a cash register. Nowadays, cash registers have largely been replaced by electronic POS terminals that can be used to process credit cards and debit cards as well as cash. A POS terminal can be physical or virtual.

A physical POS terminal comprises a physical device or terminal, e.g. in a brick-and-mortar store, restaurant, café, hospitality or leisure venue, via which a retailer or merchant can physically interact with a buyer in person to process a transaction. For example, when a customer wants to buy one or more products or services, the retailer may scan products to be sold, or enter related product or service data manually into the POS terminal, to determine a total price of the products to be sold, including any tipping and taxes such as Value Added Tax VAT or Goods and Services Tax GST. The buyer can pay for the products or services by handing over cash to the retailer, or by allowing the POS terminal to read his credit or debit card, e.g. via short range wireless communication e.g. NFC. The POS terminal may be mobile, e.g. when installed in a vehicle such as a taxi or public transport means.

A virtual POS terminal, in contrast to a physical POS terminal, may not involve physical e.g. in person interaction between a buyer and merchant but instead is arranged for virtual interaction, e.g. in the form of an online checkout point in a web-based store.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

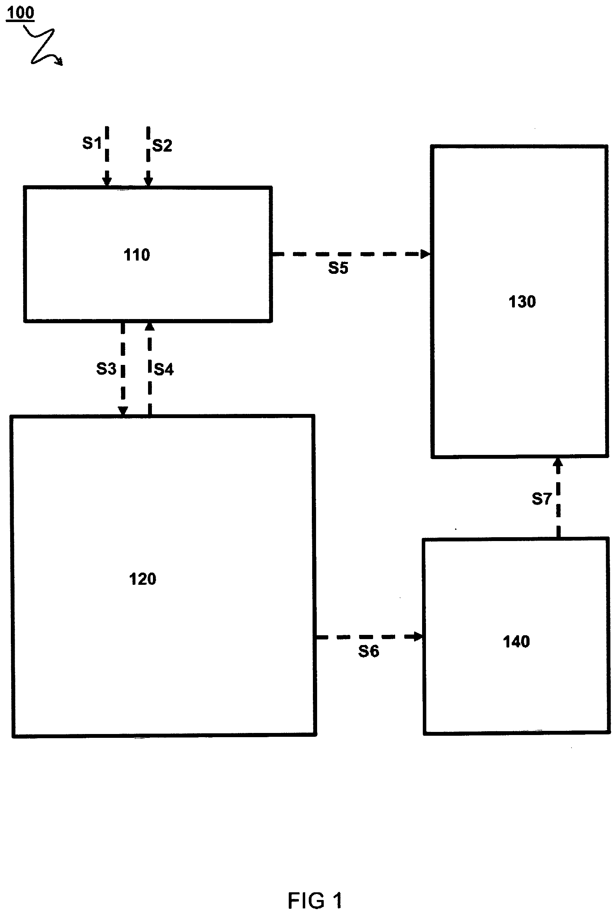

FIG 1 illustrates a method 100 for processing a digital payment. In a first step S1, respective product data associated with one or more products (e.g. goods or services) to be sold is determined, e.g. at a payment terminal 110. Products may include both goods, e.g. physical items or objects, as well as services, e.g. consultancy, rent, treatment, etc. For example, the respective product data can be determined by scanning, e.g. by a scanner, a tag including a 1D or 2D bar code e.g. Quick Response QR code or electronic tag e.g. NFC, associated to each product to be sold. Such a tag may hold product data such as a product description, item identification, pricing, tax tariff, and more. In general, any sort of data or information can be stored in a tag.

For each product, the product data comprises at least a monetary value including a product description and/or a tax tariff. Accordingly, the product data is directly useable for bookkeeping purposes. In other words, the payment request or transaction, and the payment receipt associated therewith can directly be processed and reported in an efficient manner by the payment receipt providing data associated with the payment on an individual product level. This obviates intermediate steps such as determining, for each product, the appropriate product category and corresponding tax tariff, as performed in conventional, known methods for processing digital payments.

In a second step S2, account details for a payment account of a buyer are determined. The account details can for example be determined by retrieving the buyer's or cardholder's credit or debit account information, e.g. via swiping of a credit or debit card though a magnetic strip reader of the payment terminal 110, or contactless via short range wireless communication, e.g. using a mobile contact payment system or digital wallet service. Alternatively, the account details can be manually entered in to the payment terminal 110.

Based at least on the respective product data and account details, a payment request is sent to the payment account of the buyer in step S3. For example, the cardholder presents their card swipe, tap, insert or other secure method e.g. contactless or by entering number for online credit card payment to the merchant in exchange for goods or services. In response, the POS terminal 110 generates and sends a request for payment authorization to their payment processor. Payment processors are companies that process credit and debit card transactions. Payment processors connect merchants, merchant banks, card networks and others to make card payments possible. After receiving a request for payment authorization, the payment processor may submit the transaction to the appropriate card association, eventually reaching the issuing bank, i.e. the bank, credit union or other financial institution 120 that issues debit and credit cards to cardholders, e.g. through the card associations. Thus, the authorization request is made to the issuing bank, including parameters like CW, AVS validation and expiration date.

Subsequently, the issuing bank or financial institution 120 may approve or decline the transaction. Transactions can e.g. be declined for insufficient funds or available credit, if the cardholder's account has been closed or expired, if a payment is past due or other factors. The issuing bank 120 may then send the approval or denial status back along the line to the card association, merchant bank and finally to the merchant.

Based on approval of the payment request, e.g. received at the payment terminal 110 in step S4, the payment terminal 110 generates, in step S5, a payment receipt comprising a list of the one or more products and their respective product data. The product data may include a product or service description and type, a price, a tax tariff associated to that product, a date of receipt, and more. Accordingly, the list of the payment receipt may comprise, for each product, an index or reference number, a product description e.g. brand and model, a product code or category, a sales price, a local currency optionally an exchange rate to the currency of the issuing bank, a tax tariff applicable with said product or product category, total amount charged, a product quantity, a date of sale or delivery, and/or a discount.

The payment receipt is stored on a server 130. For example, the server comprises a cloud server, a file server, or database server. The server may be dedicated, e.g. owned by a single merchant or retailer, or may be owned by a third party providing server facilities as a service to multiple merchants.

In step S3, the payment request is generated including an identifier which identifies the payment receipt stored on the server and the payment request including the identifier is sent to the buyer's payment account. For example, the identifier comprises a directory and/or filename of the payment receipt on the server. Preferably, the identifier comprises a URL link, or other type of Uniform Resource Identifier. Alternatively, the identifier comprises a location and/or name of the payment receipt on the server, e.g. a directory and/or filename.

In other words, the payment receipt is coupled to the payment request by the identifier (e.g. URL link). In general, some data included in the payment request is made visible to the buyer, i.e. holder of the payment account, via account statements. For example, the issuing bank provides an online portal, on which the account holder can access his or her account details and get an overview or list of payment requests, i.e. transactions, that occurred in a certain period of time. For example, the account holder is able to access the transactions listed in his or her account statement via a user device 140, such as a computer or smart phone.

In general, each transaction listed in the account statement comes with a number of fields containing details of the corresponding payment request, such as a date of transaction, an identity of the merchant, a transaction amount e.g. deposited to or from the bank account, a reference code e.g. a structured remittance information field to be in compliance with an ISO standard such as ISO11649 and optionally a description field i.e. SEPA unstructured remittance information field that can be provided with a limited amount of characters to describe the transaction. For example, the SEPA credit transfer dataset provides for a remittance information field, which may be used to carry XML-structured remittance information of up to 140 characters including tags, or to carry unstructured remittance information of up to 140 characters. The information provided in the remittance field can enable beneficiaries to reconcile receivable open items with payments.

The unstructured remittance information field is completely under control of the initiator of the payment and may contain free text, formatted remittance information according to any proprietary format. If the unstructured field is used any references therein will not be checked by the banks. The banks and any intermediary institutions involved in the transaction thus forward in full and without alteration the remittance information supplied in the payment request, as depicted in step S6. The remittance information must also be delivered in full and without alteration to the beneficiary, or account holder.

Since the number of characters that can be included in a payment request and/or displayed on the transaction details is limited, the optional description usually provides a brief remark that generally describes the transaction, without going into further details of the transaction as such. For example, when the transaction relates to a payment of multiple products, e.g. at a grocery store, the transaction details may not include a description of each individual item bought at the store, but instead merely indicates that the transaction relates to said shopping event.

To solve this, the present disclosure includes an identifier in the payment request sent to the buyer's payment account at the bank or financial institution 120 in step S3, e.g. in the unstructured remittance information field. The identifier couples the transaction to the corresponding payment receipt, and through the identifier the buyer is able to directly retrieve said payment receipt in step S7, e.g. by accessing his or her account statement from a user device 140. Preferably, the identifier comprises a hyperlink, such as an URL link, to the storage location of the payment receipt on the server. More than one identifier can be included in the payment request, e.g. to link to other documents besides the payment receipt, such as a warranty certificate or voucher to be used in further transactions between the merchant and client. In this way, any information associated with the transaction is bundled and retrievable from a single access point, e.g. from the account holder's online bank statement.

In step S3, the payment request may be generated and/or modified based on the storing of the payment receipt on the server. In other words, step S3 of generating and/or modifying the payment request is dependent on step S5 of storing of the payment receipt on the server 130. Storing of the payment receipt e.g. includes the act of storing, or saving, the payment receipt, or the act of generating or appointing a location on the server at which the payment receipt is to be stored. For example, the payment receipt is stored in a respective storage location on the server 130. Upon storing, an identifier e.g. storage address associated with the respective storage location may be generated. The payment request may be generated and/or modified to include the identifier e.g. link to storage address associated with the respective storage location. In another example, an identifier is generated, e.g. comprising an storage address, representative of the storage location at which the payment receipt is to be stored. The payment request may be generated and/or modified to include the identifier. Storing of the payment receipt on the server 130, in particular at a location corresponding to the identifier, may be performed at a desired time after generating the identifier. For example, the storing may be performed simultaneously with the generating and/or modifying the payment receipt. Alternatively, the storing may be performed at a later stage. For example, the storing may comprise storing a plurality of payment receipts, e.g. two or more, associated with separate transactions, e.g. at regular intervals in time, to bundle data transmission to the server.

Preferably, access to the payment receipt in step S7, from user device 140, is restricted and/or secured, e.g. only accessible after verification of the user and/or device 140 accessing the payment receipt. For example, the server on which the payment receipt is stored may be secured such that each payment receipt is accessible by the corresponding client, or buyer only. The payment receipt may be accessible via a webpage referenced by a Universal Resource Locator (URL) link, wherein the webpage requires login information before allowing access to the payment receipt. For example, in order to access his or her payment receipts, the client may need to provide credentials, such as an access code, a user name and password, or biometrical identification, e.g. via two factor identification. Alternatively, or additionally, the payment receipt may be accessible via a registered device.

Also other or further forms of security can be envisaged. For example, the URL itself may include a code to access the payment receipt. For example, the URL may be obfuscated, e.g. comprising (quasi) random characters known only to the server, e.g. forming a directory and/or filename of the payment receipt. For example, the unique identifier comprises a unique text of letters, numbers, and/or other characters, that becomes part of a description i.e. unstructured remittance information field for the corresponding payment. In this way, the payment request is configured such that the unique identifier forms part of payment details of the corresponding payment in the buyer's payment account.

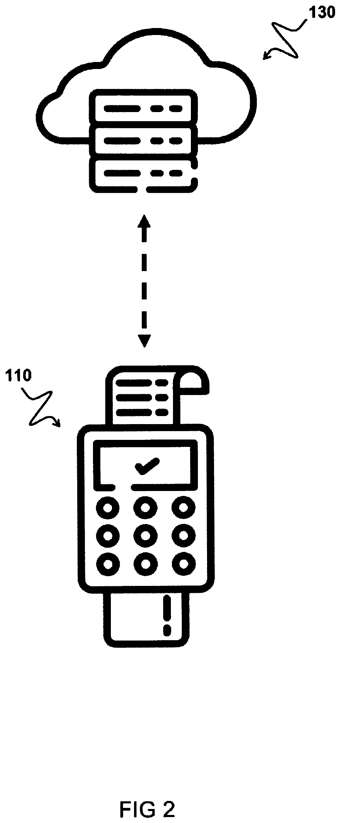

FIG 2 illustrates an embodiment of a payment terminal 110 configured to perform the method described herein. For example, the payment terminal is part of a system, e.g. a retail management system, arranged for processing digital payments and payment receipts. Such a system may include a server, or may be configured to communicate with a server of a third party, such as a financial institution or other service provider. The payment terminal 110 is arranged for determining product data associated with one or more products (goods or services) to be sold, e.g. by scanning a tag or barcode associated with said products, or by allowing data associated with the products into the payment terminal.

The payment terminal is further arranged for determining account details for a payment account of a buyer. For example, the payment terminal may be arranged for reading a credit or debit card of the buyer.

The payment terminal is arranged for sending a payment request to the payment account of the buyer, based at least on the respective product data and account details, and the payment terminal is arranged for generating, based on approval of the payment request, a payment receipt comprising a list of the one or more products and their respective product data. The payment terminal is arranged for including an identifier (e.g. a URL link) to the payment request, which identifies the payment receipt stored on the server.

The payment terminal is in communication with a server, e.g. of the merchant, a financial institution or a third party, and is arranged for sending the payment request including the identifier to the buyer's payment account, and for storing the generated payment receipt on the server 130, from where the payment receipt can be accessed by the buyer, e.g. via a user device.

For the purpose of clarity and a concise description, features are described herein as part of the same or separate embodiments, however, it will be appreciated that the scope of the invention may include embodiments having combinations of all or some of the features described herein.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A method for processing a digital payment, comprising:
determining respective product data associated with one or more products to be sold;
determining account details for a payment account of a buyer;
based at least on the respective product data and account details, sending a payment request to the payment account of the buyer;
based on approval of the payment request, generating a payment receipt comprising a list of the one or more products and their respective product data; and
storing the payment receipt on a server;
wherein the payment request is generated including an identifier which identifies the payment receipt stored on the server and the payment request including the identifier is sent to the buyer's payment account.

2. The method according to claim 1, wherein the payment request is generated and/or modified based on the storing of the payment receipt on the server.

3. The method according to any preceding claim, wherein the identifier comprises a location and/or name of the payment receipt on the server.

4. The method according to any preceding claim, wherein the identifier comprises a Uniform Resource Identifier (URI), preferably a Universal Resource Locator (URL) link.

5. The method according to any preceding claim, wherein the data server is configured to store the payment receipt at a location accessible via a Universal Resource Locator (URL) link, wherein the unique identifier comprises the URL link.

6. The method according to any preceding claim, wherein the server is configured to access the stored payment receipt based on the unique identifier.

7. The method according to any preceding claim, wherein the payment request is generated and/or modified based on a storage location of the payment receipt on the server.

8. The method according to any preceding claim, wherein, prior to sending the payment request, the payment request is modified by adding the identifier to the payment request.

9. The method according to any preceding claim, wherein access to the payment receipt is restricted and/or secured, wherein the payment receipt is accessible via a webpage referenced by a Universal Resource Locator (URL), and wherein the webpage requires login information before allowing access to the payment receipt.

10. The method according to any preceding claim, wherein the payment request is configured such that the unique identifier forms part of payment details of the corresponding payment in the buyer's payment account.

11. The method according to any preceding claim, wherein, for each product, the product data comprises at least a monetary value including a product description and/or a tax tariff.

12. The method according to any preceding claim, wherein the payment receipt comprises a list of multiple products and corresponding multiple monetary values; wherein the payment request comprises a single monetary value based on a sum of the multiple monetary values.

13. A non-transitory computer-readable medium storing instructions that, when executed by a payment terminal, causes the payment terminal to perform the method according to any of preceding claims.

14. A payment terminal configured to perform the method according to any of claims 1-12 and/or comprising the non-transitory computer readable medium storing instructions according to claim 13.

15. A system comprising the payment terminal according to claim 14, and a storage server for storing payment receipts.
